# EUROPEAN PATENT SPECIFICATION

(11) **EP 3 905 615 B1**
(45) Date of publication and mention of the grant of the patent: **27.08.2025**
(21) Application number: 19905562.5
(22) Date of filing: 31.10.2019
(51) Int. Cl.: H04L 47/263, H04L 47/12, H04L 47/26

(54) **PFC FRAME-BASED CONGESTION CONTROL METHOD AND APPARATUS, SYSTEM AND STORAGE MEDIUM**
AUF PFC-FRAME BASIERENDES ÜBERLASTUNGSREGELUNGSVERFAHREN, VORRICHTUNG, SYSTEM UND SPEICHERMEDIUM
PROCÉDÉ DE RÉGULATION DE CONGESTION FONDÉE SUR UNE TRAME PFC, APPAREIL, SYSTÈME ET SUPPORT D'INFORMATIONS

(30) Priority: 29.12.2018 CN 201811654832
(43) Date of publication of application: 03.11.2021
(73) Proprietor: ZTE Corporation, Shenzhen, Guangdong 518057 (CN)
(72) Inventor: YU, Jinghai, Shenzhen, Guangdong 518057 (CN); GAO, Chenqiang, Shenzhen, Guangdong 518057 (CN)
(74) Representative: Canzler & Bergmeier Patentanwälte Partnerschaft mbB
(86) International application number: PCT/CN2019/114781
(87) International publication number: WO 2020/134553

(56) References cited:
- EP-A2- 2 911 352
- WO-A1-2018/218957
- CN-A- 103 997 465
- CN-A- 108 512 774
- US-A1- 2002 087 723
- US-A1- 2011 261 686
- US-A1- 2016 006 677

## Description

### TECHNICAL FIELD

The present disclosure relates to the field of network communication technologies, and particularly relates to a PFC frame-based congestion control method and apparatus, a system and a storage medium.

### BACKGROUND

PFC (Priority-based Flow Control) is one of the functions in the IEEE Data Center Bridge protocol family, and is an enhancement to the pause mechanism for conventional flow control. Upon detecting congestion, a receiving terminal notifies a transmitting terminal to pause data transmission via a PFC PAUSE frame. However, since PFC completely stops data transmission of the corresponding priority, some problems may occur, including: unreasonable pause time, which may cause packet loss, repeat transmission of a previous protocol, congestion diffusion and the like; failure of mechanisms depending on some urgent data and data with a time limit, such as time synchronization data, when PFC is used for congestion control; and failure of a preemption function caused by PFC, for example, some mechanisms of TSN (Telecommunication Supporting Network) require the PFC function to be turned off, etc.

The above is only for an aid of understanding the technical solution herein, and does not represent an admission that the above is prior art.

A European patent application, whose publication number is EP2911352A2, discloses a network device implementing the subject system for end to end flow control may include at least one processor circuit that may be configured to detect that congestion is being experienced by at least one queue of a port and identify another network device that is transmitting downstream traffic being queued at the at least one queue of the port that is at least partially causing the congestion. The at least one processor circuit may be further configured to generate an end to end flow control message that comprises an identifier of the port, the end to end flow control message indicating that the downstream traffic should be flow controlled at the another network device. The at least one processor circuit may be further configured to transmit, out-of-band and through at least one intermediary network device, the end to end flow control message to the another network device.

A US patent application, whose publication number is US20020087723A1, discloses a network device that controls the communication of data frames between stations receives data frames having different levels of priority. The network device identifies the levels of priority and processes the frames based on the priority level. When a congestion condition associated with a resource on the network device occurs, the network device generates a pause frame that includes a priority indicator and transmits the pause frame to at least one station. When a receiving station receives the pause frame, the receiving station suspends transmission of data frames having a priority corresponding to the priority indicator and continues transmitting frames having other priorities.

### SUMMARY

The invention is set out in the appended set of claims.

### BRIEF DESCRIPTION OF THE DRAWINGS

FIG. 1 is a schematic structural diagram of a communication system in a hardware operating environment involved in the technical solution of the present disclosure;
FIG. 2 is a schematic flowchart illustrating a PFC frame-based congestion control method according to the present disclosure;
FIG. 3 is a schematic diagram illustrating a standard format of a PFC PAUSE frame according to the present disclosure;
FIG. 4 is another schematic flowchart illustrating a PFC frame-based congestion control method according to the present disclosure;
FIG. 5 is a schematic diagram illustrating a format of an extended priority_enable_vector field according to the present disclosure;
FIG. 6 is a schematic diagram illustrating a format of a modified time field;
FIG. 7 is a schematic diagram illustrating a PFC frame format in both deceleration and pause at priority 2 according to the present disclosure;
FIG. 8 is a schematic diagram illustrating a PFC frame format in deceleration at both priority 2 and priority 3 according to the present disclosure;
FIG. 9 is another schematic flowchart illustrating a PFC frame-based congestion control method according to the present disclosure;
FIG. 10 is a schematic diagram illustrating a PFC frame format with an added reduce field according to the present disclosure;
FIG. 11 is a schematic diagram illustrating a PFC frame format in both deceleration and pause at priority 2 according to the present disclosure;
FIG. 12 is a schematic diagram illustrating a PFC frame format in deceleration at both priority 2 and priority 3 according to the present disclosure;
FIG. 13 is another schematic flowchart illustrating a PFC frame-based congestion control method according to the present disclosure;
FIG. 14 is a schematic diagram illustrating a PFC frame format with an added TLV field according to the present disclosure;
FIG. 15 is a schematic diagram illustrating a PFC frame format in deceleration at priority 2 and in pause at priority 3 according to the present disclosure; and
FIG. 16 is a schematic diagram illustrating functional modules in a PFC frame-based congestion control apparatus according to the present disclosure.

Implementations, functions, features and advantages of the present disclosure will be further explained below with reference to the embodiments and the accompanying drawings.

### DETAILED DESCRIPTION

It should be understood that the specific embodiments described herein are merely for illustration of the disclosure and are not intended to limit the disclosure.

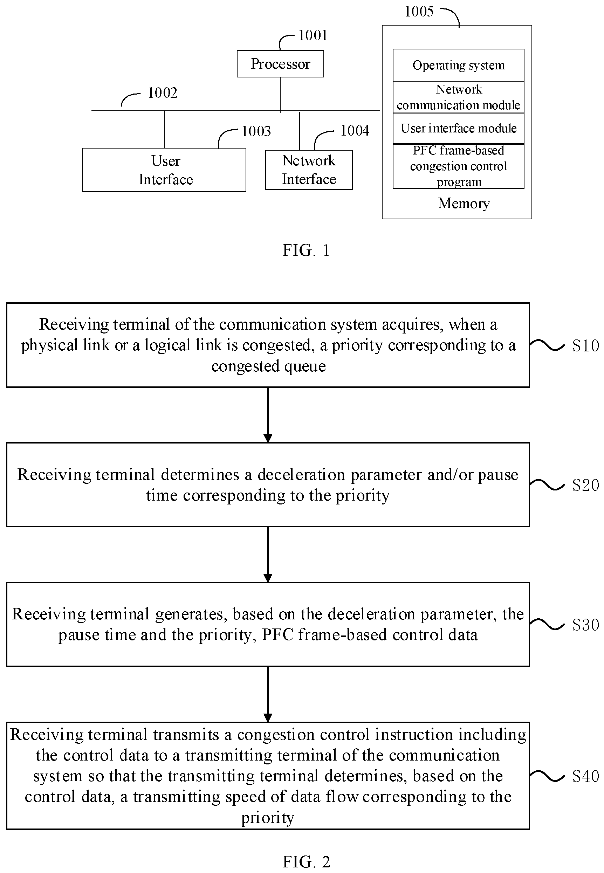

As shown in FIG. 1, FIG. 1 is a schematic structural diagram of a communication system in a hardware operating environment involved in the technical solution of the present disclosure.

As shown in FIG. 1, the communication system may include: a processor 1001, such as a CPU, a network interface 1004, a user interface 1003, a memory 1005, and a communication bus 1002. The communication bus 1002 is configured to enable connective communication between these components. The user interface 1003 may include a display, and an input unit such as a keyboard, and optionally the user interface 1003 may further include a standard wired interface, or a standard wireless interface. The network interface 1004 may optionally include a standard wired interface or a standard wireless interface (e.g., a WI-FI interface). The memory 1005 may be a high-speed RAM memory or a stable memory (e.g., a non-volatile memory) such as a magnetic disk memory. The memory 1005 may optionally be a storage device separate from the processor 1001 described above.

Optionally, the communication system may further include a camera, a Radio Frequency (RF) circuit, a sensor, an audio circuit, a WiFi module, and the like. The sensor may include, for example, an optical sensor, a motion sensor, and the like. Apparently, the communication system may be further provided with other sensors such as a gyroscope, a barometer, a hygrometer, a thermometer, and an infrared sensor, which are not enumerated herein.

Those skilled in the art will appreciate that the communication system structure shown in FIG. 1 does not constitute a limitation to the communication system, and the communication system may include more or fewer components than shown, or a combination of some components, or a different arrangement of components.

As shown in FIG. 1, the memory 1005, as a computer storage medium, may include an operating system, a network communication module, a user interface module, and a PFC frame-based congestion control program.

In the communication system shown in FIG. 1, the network interface 1004 is mainly configured to be connected to and perform data communication with a backend server; the user interface 1003 is mainly configured to be connected to and perform data communication with a client (user terminal); and the processor 1001 may be configured to call the PFC frame-based congestion control program stored in the memory 1005.

In this embodiment, the communication system includes: a memory 1005, a processor 1001 and a PFC frame-based congestion control program stored on the memory 1005 and executable on the processor 1001. When the processor 1001 calling the PFC frame-based congestion control program stored in the memory 1005, steps of the PFC frame-based congestion control method provided in various embodiments of the present application are performed.

The present disclosure further provides a PFC frame-based congestion control method. Referring to FIG. 2, FIG. 2 is a schematic flowchart illustrating a PFC frame-based congestion control method according to the present disclosure.

PFC is defined at a full-duplex MAC layer connected by point-to-point links. Many current network devices support PFC, where PFC allows 8 queues to be created on one Ethernet link, and assigns a priority (CoS) to each queue so that any one of the queues can be individually paused and resumed, while allowing traffic of other queues to pass through without interruption.

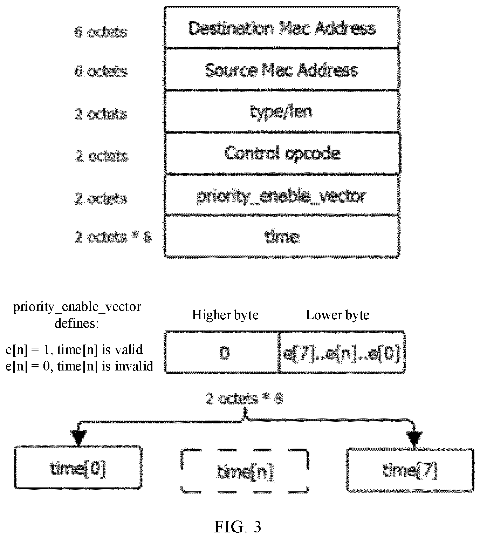

A standard format of a PFC PAUSE frame (hereinafter "PFC frame") is as shown in FIG. 3, where "Destination Mac Address" represents a Destination Mac (MAC) Address field, which occupies 6 bytes, and has a designated value of 01-80-C2-00-00-01; "Source Mac Address" represents an MAC address field of a source, which occupies 6 bytes; "type/len" represents an Ethernet frame length or type field, which has a value of 88-08 and indicates that the frame is an MAC control frame; "Control opcode" represents MAC control operation codes, which occupy 2 bytes; priority_enable_vector represents priority vector information, which occupies 2 bytes, in which a higher byte is reserved and has a default 0, and each bit of a lower byte represents whether the corresponding time[n] is valid, e[n] represents priority n; when e[n] is 1, time[n] is valid, and when e[n] is 0, time[n] is invalid; and "time" represents a time for pausing frame transmission, including 8 array units from time[0] to time[7], each array unit being 2 bytes. When e[n] is 0, time[n] has no meaning; when e[n] is 1, time[n] represents a time for which a receiving station stops transmission of messages at priority n. The unit of time, namely pause_quanta, represents the time required by a physical layer chip to transmit 512 bits of data, and the total time priority_timer[n] = time[n] * pause_quanta, where time[n] takes a value in the range of 0 to 65535. Therefore, for each transmission of PFC PAUSE frames, the longest time length required for a peer device to pause transmission is: 65535 * pause_quanta.

The PFC frame-based congestion control method includes the following steps S10 to S40.

At step S10, a receiving terminal of the communication system acquires, when a physical link or a logical link is congested, a priority corresponding to a congested queue.

When a queue of a certain priority is congested, a priority corresponding to the congested queue is further acquired.

It should be noted that the receiving terminal determines specific values of the priority_enable_vector field, the time field, and the like of the PFC frame according to the priority of the queue, and the standard format of the PFC frame is optimized in the present disclosure so that the priority_enable_vector corresponding to the optimized PFC frame includes 2 bytes, i.e., a higher byte and a lower byte. Each bit of the lower byte represents whether data transmission in the queue of the corresponding priority is temporarily stopped, and each bit of the higher byte represents whether data transmission in the queue of the corresponding priority is temporarily decelerated.

At step S20, the receiving terminal determines a deceleration parameter and/or pause time corresponding to the priority.

When congestion occurs, a solution for solving the congestion is further determined according to a queue length of the congested queue. In other words, the transmitting terminal is notified to control the congested queue by temporarily stopping data transmission, or temporarily decelerating data transmission, or firstly temporarily stopping and then temporarily decelerating data transmission, or firstly temporarily decelerating and then temporarily stopping data transmission. As for specifically which control mode is adopted, it is determined according to the queue length of the current queue. That is, a user presets a correspondence relationship between queue lengths and control modes, and when a congestion occurs, the correspondence relationship is retrieved according to the queue length to determine the control mode for solving the congestion.

Specifically, the congestion control means in the present disclosure is divided into two types, one is temporarily stopping data transmission, and the other is temporarily decelerating data transmission. If the control means of temporarily stopping data transmission is to be adopted, a pause time corresponding to the priority needs to be determined; and if the control means of temporarily decelerating data transmission is to be adopted, a deceleration rate and a deceleration time corresponding to the priority need to be determined.

At step S30, the receiving terminal generates, based on the deceleration parameter, the pause time and the priority, PFC frame-based control data.

After the priority, the deceleration parameter, and the pause time are determined, the PFC frame-based control data is further generated based on the deceleration parameter, the pause time and the priority. It should be noted that the standard PFC frame only reflects the means of temporarily stopping data transmission of the congested queue, and the present disclosure is enhancement based on the standard PFC frame, which supports temporary stop as well as temporary deceleration of data transmission at the same time, and is embodied by the control data.

At step S40, the receiving terminal transmits a congestion control instruction including the control data to a transmitting terminal of the communication system so that the transmitting terminal determines, based on the control data, a transmitting speed of data flow corresponding to the priority.

The receiving terminal generates, based on the deceleration parameter, the pause time and the priority, the PFC frame-based control data, and the receiving terminal transmits the congestion control instruction including the control data to the transmitting terminal so that the transmitting terminal determines, according to the control data, the transmitting speed of data flow of the queue corresponding to the priority. It should be noted that if the means of temporarily stopping data transmission is adopted, the data transmitting speed at the transmitting terminal is 0.

Further, in an implementation, after step S40, the method further includes: when a control time corresponding to the control data is expired, the transmitting terminal transmits a data flow to the receiving terminal according to a preset speed (step S50).

Upon receiving the congestion control instruction, the transmitting terminal control the data transmitting speed according to the control data in the congestion control instruction. Meanwhile, the control data further provides the control time, that is, a pause time and a deceleration time. When the control time is expired, the transmitting terminal resumes the data transmitting speed, that is, transmits the data flow to the receiving terminal at the preset speed.

Further, in an implementation, before step S10, the method further includes: the receiving terminal detects in real time, based on a queue length corresponding to a queue, whether congestion occurs in any of the queues (step S60).

The receiving terminal detects in real time whether each queue is congested according to the queue length corresponding to each queue, and timely congestion control is required when a queue is congested, so as to avoid network paralysis.

Specifically, step S60 includes: the receiving terminal determines whether the queue length is greater than a threshold (step S61). When the queue length is greater than or equal to the threshold, it is determined that the queue is congested.

The receiving terminal detects in real time the queue length of each queue, and compares the queue length with the threshold. The threshold is a boundary value for determining congestion, and is set by a user according to actual situations, which is not limited in the present disclosure. When the length of the queue corresponding to a certain priority exceeds the threshold, it is determined that the queue is congested. In contrast, when the queue length does not exceed the threshold, it is determined that the queue is not congested and traffic control is not needed.

In the PFC frame-based congestion control method provided in the embodiments of the present disclosure, the receiving terminal of the communication system acquires, when a physical link or a logical link is congested, a priority corresponding to the congested queue; then the receiving terminal determines, based on the congested queue, the deceleration parameter and/or pause time corresponding to the priority; next, the receiving terminal generates, based on the deceleration parameter, the pause time and the priority, the PFC frame-based control data, and then the receiving terminal transmits the congestion control instruction including the control data to the transmitting terminal of the communication system so that the transmitting terminal determines, based on the control data, the transmitting speed of the data flow in the congested queue. By controlling the data traffic via the control data, the problem of network congestion is solved, and meanwhile, there is no packet loss in data transmission, emergency data can be transmitted in time, and a preemption mechanism can take effect.

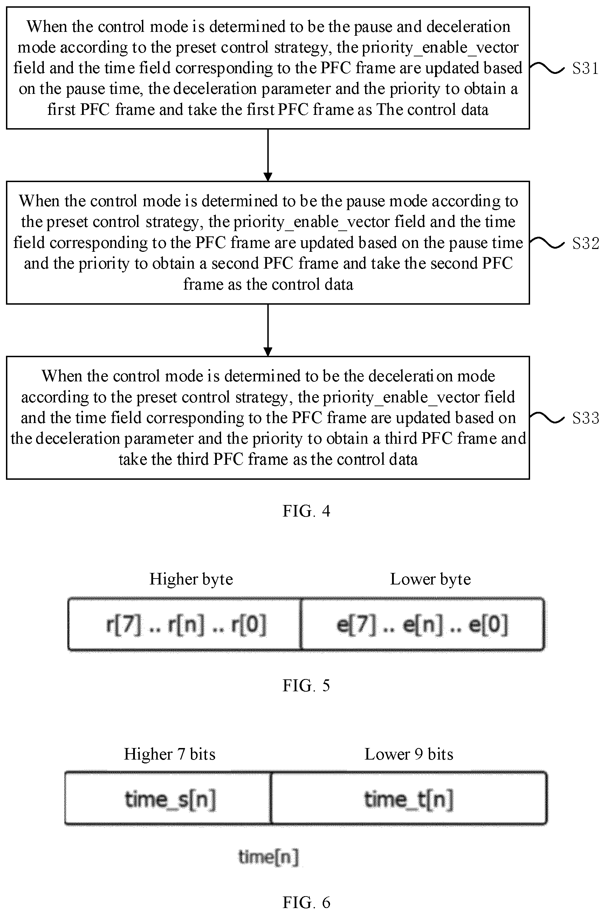

Based on the above embodiment and referring to FIG. 4, a PFC frame-based congestion control method according to the present disclosure is proposed. In this embodiment, step S30 includes the following steps S31 to S33. In this embodiment, the reserved higher byte in the priority_enable_vector field in the PFC frame format is used as an enable field for the deceleration function. A format of the expanded priority_enable_vector field is as shown in FIG. 5. Similar to the lower byte, 8 bits represent the corresponding priority, r[n] represents priority n, when r[n] is 1, it indicates enabling the deceleration function at priority n; and when r[n] is 0, it indicates that the deceleration function is enabled. Information required by the deceleration function includes a deceleration time and a deceleration rate, which are embodied by modifying the time field. As shown in FIG. 6, the modified time_s[n] and time_t[n] represents the deceleration rate and the deceleration time respectively. The deceleration rate may be represented in a percentage form, and take values from 0 to 100, which correspond to 0% to 100%, and represent a rate after deceleration obtained by multiplying an original transmission rate by the percentage. The deceleration rate may also adopt a multiple form, and take values in the range from 1 to 127, which represent dividing the original transmission rate by the value of multiple.

At step S31, when the control mode is determined to be a pause and deceleration mode according to a preset control strategy, the priority_enable_vector field and the time field corresponding to a PFC frame are updated based on the pause time, the deceleration parameter and the priority to obtain a first PFC frame and take the first PFC frame as the control data.

The preset control strategy includes three control modes, i.e., the pause and deceleration mode, a pause mode and a deceleration mode. The receiving terminal determines a current control mode for the congestion according to the preset control strategy based on the accumulated traffic corresponding to the current congested queue. The preset control strategy is customized by a user, and is not limited in the disclosure.

When the control mode is determined to be the pause and deceleration mode according to the preset control strategy, it indicates that temporary stop and temporary deceleration of data transmission are required, and the pause function and the deceleration function corresponding to the priority need to be enabled. That is, a bit corresponding to the priority in the lower byte of the priority_enable_vector field of the PFC frame needs to be set, and a bit corresponding to the priority in the higher byte of the priority_enable_vector field of the PFC frame needs to be set. Meanwhile, a byte corresponding to the priority in the time field of the PFC frame is updated based on the pause time and the deceleration parameter.

It should be noted that when temporary stop and temporary deceleration of data transmission are implemented at the same time, the pause time is the same as the deceleration time corresponding to the deceleration parameter, i.e., time_t[n] represents the deceleration time, as well as the pause time. The execution sequence of the temporary stop and the temporary deceleration is determined according to the preset control strategy.

The PFC frame updated based on the deceleration parameter, the pause time and the priority is the control data.

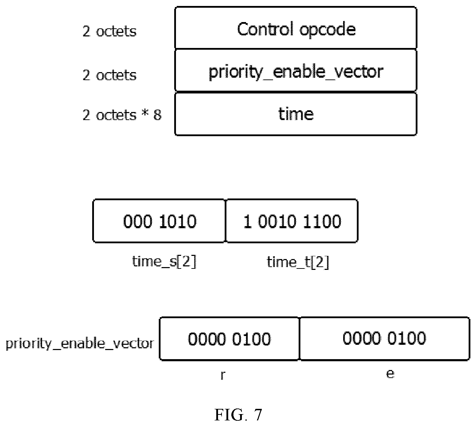

For example, both the deceleration function and the pause function are used at the same priority, and the time field is modified as deceleration information, where the deceleration rate takes a value of multiple. When a queue is congested, both the deceleration function and the pause function are implemented for the same priority. As shown in FIG. 7, priority 2 needs to be decelerated and paused at a decelerated rate multiple 10, and the deceleration time and the pause time are both 300. The corresponding time_s[2] is 10, time_t[2] is 300, and the rest time fields are set to 0. The deceleration enable r[2] and the pause enable e[2] are both set to 1, the rest r[n] and e[n] are set to 0, and a decimal value of the overall priority_enable_vector is 1028.

At step S32, when the control mode is determined to be the pause mode according to the preset control strategy, the priority_enable_vector field and the time field corresponding to the PFC frame are updated based on the pause time and the priority to obtain a second PFC frame and take the second PFC frame as the control data.

When the control mode is determined to be the pause mode according to the preset control strategy, it indicates that a bit corresponding to the priority in the lower byte of the priority_enable_vector field of the PFC frame needs to be set, and then the pause time is updated to a position where the time field corresponds to the priority. The PFC frame updated based on the pause time and the priority is the control data.

At step S33, when the control mode is determined to be the deceleration mode according to the preset control strategy, the priority_enable_vector field and the time field corresponding to the PFC frame are updated based on the deceleration parameter and the priority to obtain a third PFC frame and take the third PFC frame as the control data.

When the control mode is determined to be the deceleration mode according to the preset control strategy, the deceleration function corresponding to the priority need to be enabled. That is, a bit corresponding to the priority in the higher byte of the priority_enable_vector field of the PFC frame needs to be set, and then the deceleration parameter is updated to a position where the time field corresponds to the priority.

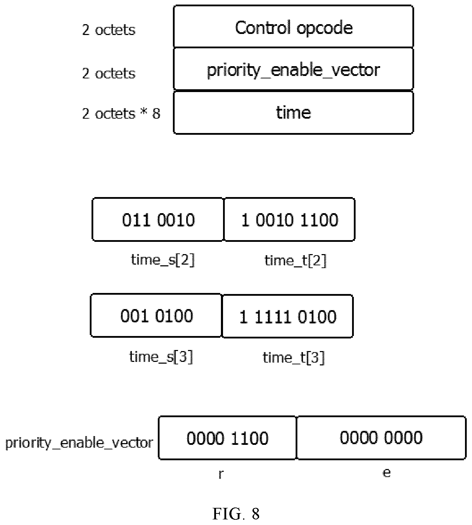

For example, when a queue is congested, only the deceleration function is used, and the time field is modified as deceleration information, where the deceleration rate takes a percentage. As shown in FIG. 8, priorities 2 and 3 need to be decelerated at deceleration rates are 50% and 20% for a time of 300 and a time of 500, respectively. The corresponding time_s[2] is 50, time_t[2] is 300, time_s[3] is 20, time_t[3] is 500, and the rest time fields are set to 0. The deceleration enable r[2] and r[3] are both set to 1, the rest r[n] are set to 0, all e[n] are set to 0, and a decimal value of the overall priority_enable_vector is 3072.

In the PFC frame-based congestion control method provided in the embodiments of the present disclosure, new control data is generated by enabling the reserved higher byte in the priority_enable_vector field and redefining the time field, and network congestion is solved based on the control data so that the congestion control mechanism is more flexible, and the technical means for solving network congestion are enriched.

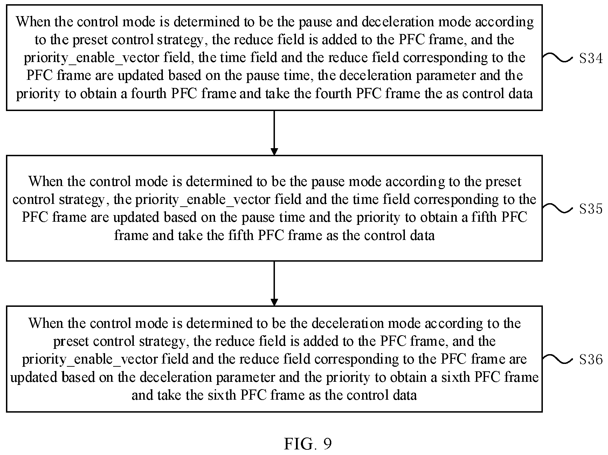

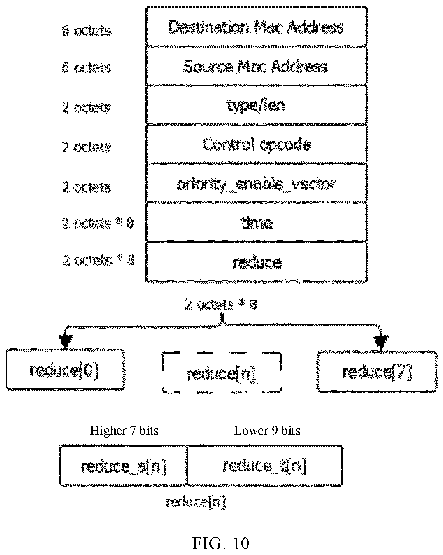

Based on the above embodiments and referring to FIG. 9, a PFC frame-based congestion control method according to the present disclosure is proposed. In this embodiment, step S30 includes the following steps S34 to S36. In this embodiment, the reserved higher byte in the priority_enable_vector field in the PFC frame format is used as an enable field for the deceleration function. A format of the expanded priority_enable_vector field is as shown in FIG. 5, which is consistent with the description with respect to FIG. 5, and thus is not repeated here. Information required by the deceleration function includes a deceleration time and a deceleration rate, which is embodied by adding a reduce field after the time field, including 8 array units from reduce [0] to reduce [7], each array unit being 2 bytes. the higher 7 bits of reduce[n] represent the deceleration rate reduce_s[n] and the lower 9 bits of reduce[n] represent the deceleration time reduce_t[n]. A PFC frame format with the added reduce field is as shown in FIG. 10. The deceleration rate may be represented in the form of a percentage or a multiple, which is consistent with the description with respect to FIG. 6, and thus is not repeated here. The deceleration time reduce_t[n] takes a value in the range of 0 to 512, and is in the same unit as pause_quanta in the PFC frame, representing the time required by the physical layer chip to transmit 512 bits of data, and the total time priority_reduce_time[n] = reduce_t[n] * pause_quanta.

At step S34, when the control mode is determined to be the pause and deceleration mode according to the preset control strategy, the reduce field is added to the PFC frame, and the priority_enable_vector field, the time field and the reduce field corresponding to the PFC frame are updated based on the pause time, the deceleration parameter and the priority to obtain a fourth PFC frame and take the fourth PFC frame as the control data.

When the control mode is determined to be the pause and deceleration mode according to the preset control strategy, it indicates that temporary stop and temporary deceleration of data transmission are required, and the pause function and the deceleration function corresponding to the priority need to be enabled. That is, a bit corresponding to the priority in the lower byte of the priority_enable_vector field of the PFC frame needs to be set, and a bit corresponding to the priority in the higher byte of the priority_enable_vector field of the PFC frame needs to be set. Meanwhile, the reduce field is added after the time field, and then the deceleration parameter is updated to a position where the reduce field corresponds to the priority.

The PFC frame with the added reduce field and updated based on the deceleration parameter, the pause time and the priority is the control data.

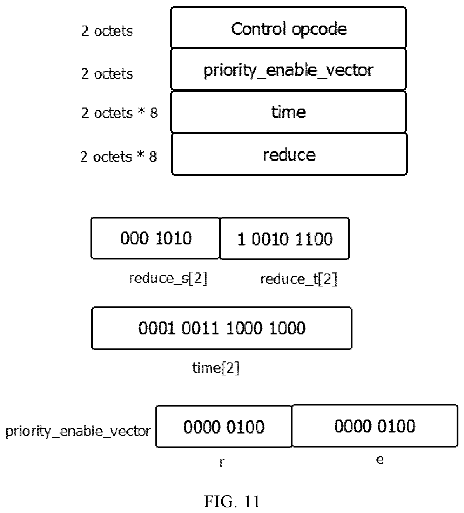

For example, both the deceleration function and the pause function are used at the same priority, and the reduce field is added as deceleration information, where the deceleration rate takes a percentage value. As shown in FIG. 11, priority 2 needs to be decelerated and paused at a decelerated rate percentage 10% for a deceleration time of 300 and a pause time of 5000. The corresponding time[2] is 5000, reduce_s[2] is 10, reduce_t[2] is 300, and the rest time fields and reduce fields are set to 0. The deceleration enable r[2] and the pause enable e[2] are both set to 1, the rest r[n] and e[n] are set to 0, and a decimal value of the overall priority_enable_vector is 1028.

Step S35, when the control mode is determined to be the pause mode according to the preset control strategy, the priority_enable_vector field and the time field corresponding to the PFC frame are updated based on the pause time and the priority to obtain a fifth PFC frame and take the fifth PFC frame as the control data.

When the control mode is determined to be the pause mode according to the preset control strategy, it indicates that the means of temporarily stopping data transmission is to be adopted, and the pause function corresponding to the priority need to be enabled. That is, a bit corresponding to the priority in the lower byte of the priority_enable_vector field of the PFC frame needs to be set, and then the pause time is updated to a position where the time field corresponds to the priority. The PFC frame updated based on the pause time and the priority is the control data.

At step S36, when the control mode is determined to be the deceleration mode according to the preset control strategy, the reduce field is added to the PFC frame, and the priority_enable_vector field and the reduce field corresponding to the PFC frame are updated based on the deceleration parameter and the priority to obtain a sixth PFC frame and take the sixth PFC frame as the control data.

When the control mode is determined to be the deceleration mode according to the preset control strategy, it indicates that the means of temporarily decelerating data transmission needs to be adopted, and the deceleration function corresponding to the priority need to be enabled. That is, a bit corresponding to the priority in the higher byte of the priority_enable_vector field of the PFC frame needs to be set, and meanwhile, the reduce field is added after the time field, and then the deceleration parameter is updated to a position where the reduce field corresponds to the priority.

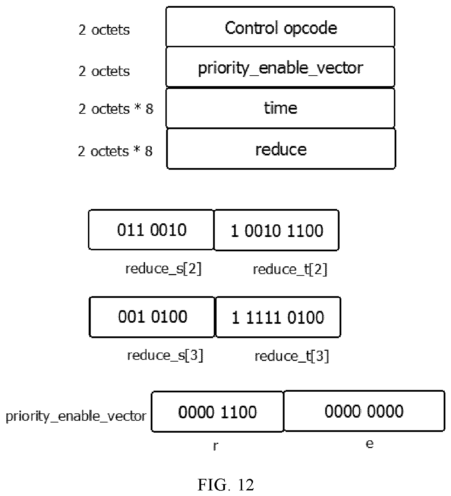

For example, when a queue is congested, only the deceleration function is used, and the reduce field is added as deceleration information, where the deceleration rate takes a percentage. As shown in FIG. 12, priorities 2 and 3 need to be decelerated at deceleration rates are 50% and 20% for a time of 300 and a time of 500, respectively. The corresponding reduce_s[2] is 50, reduce_t[2] is 300, reduce_s[3] is 20, reduce_t[3] is 500, and the rest reduce fields are set to 0. The deceleration enable r[2] and r[3] are both set to 1, the rest r[n] are set to 0, all e[n] are set to 0, and a decimal value of the overall priority_enable_vector is 3072.

In the PFC frame-based congestion control method provided in the embodiments of the present disclosure, new control data is generated by enabling the reserved higher byte in the priority_enable_vector field and adding the reduce field after the time field as deceleration information, and network congestion is solved based on the control data so that the congestion control mechanism is more flexible, and the technical means for solving network congestion are enriched.

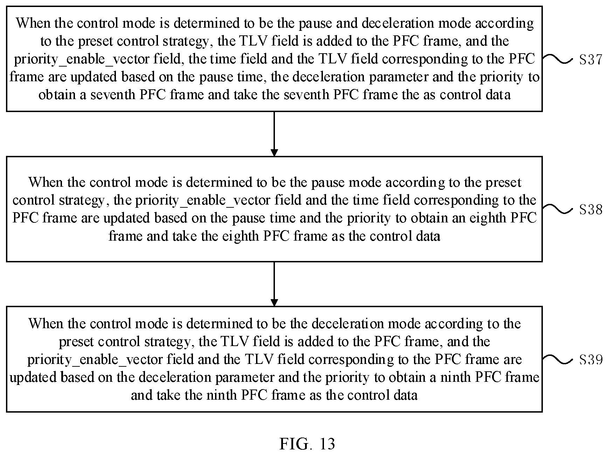

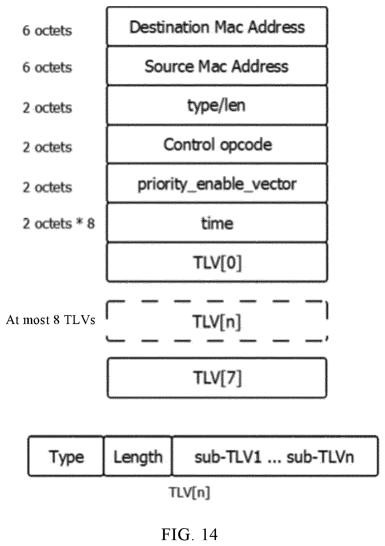

Based on the above embodiments and referring to FIG. 13, a PFC frame-based congestion control method according to the present disclosure is proposed. In this embodiment, step S30 includes the following steps S37 to S39. In this embodiment, the reserved higher byte in the priority_enable_vector field in the PFC frame format is used as an enable field for the deceleration function. A format of the expanded priority_enable_vector field is as shown in FIG. 5, which is consistent with the description with respect to FIG. 5, and thus is not repeated here. A TLV (Type Length Value) field is added after the time field to indicate information required by deceleration function. The number of the added TLVs corresponds to the number of priorities enabling the deceleration function, and at most 8 TLV fields can be added. The information required by deceleration function is contained in sub-TLVs. A PFC frame format with the added TLV field is as shown in FIG. 14. "Type" represents a type of the deceleration, which may be common deceleration including only a deceleration rate and a deceleration time; or may be a different deceleration algorithm, such as an RP (Reaction Point) algorithm, or other customized deceleration algorithms. "Type" occupies two bytes and "Length" occupies 4 bytes. When only the pause function is enabled in priority_enable_vector, i.e., when e[n] = 1 and r[n] = 0, 2 bytes of the time[n] represent the original pause time without adding the TLV field; when only the deceleration function is enabled, i.e., when e[n] = 0 and r[n] = 1, time[n] is invalid, and corresponding TLV field and sub-TLV are added; and when the pause function and the deceleration function are both enabled, i.e., when e[n] = 1 and r[n] = 1, time[n] represents the pause time, and the corresponding TLV field and sub-TLV are added.

At step S37, when the control mode is determined to be the pause and deceleration mode according to the preset control strategy, the TLV field is added to the PFC frame, and the priority_enable_vector field, the time field and the TLV field corresponding to the PFC frame are updated based on the pause time, the deceleration parameter and the priority to obtain a seventh PFC frame and take the seventh PFC frame as the control data.

When the control mode is determined to be the pause and deceleration mode according to the preset control strategy, it indicates that temporary stop and temporary deceleration of data transmission are required, and the pause function and the deceleration function corresponding to the priority need to be enabled. That is, a bit corresponding to the priority in the lower byte of the priority_enable_vector field of the PFC frame needs to be set, and a bit corresponding to the priority in the higher byte of the priority_enable_vector field of the PFC frame needs to be set. Meanwhile, the TLV field is added after the time field, and then the deceleration parameter is updated to a position where the TLV field corresponds to the priority. It should be noted that the TLV field is added only when the deceleration function is enabled. The PFC frame with the added TLV field and updated based on the deceleration parameter, the pause time and the priority is the control data.

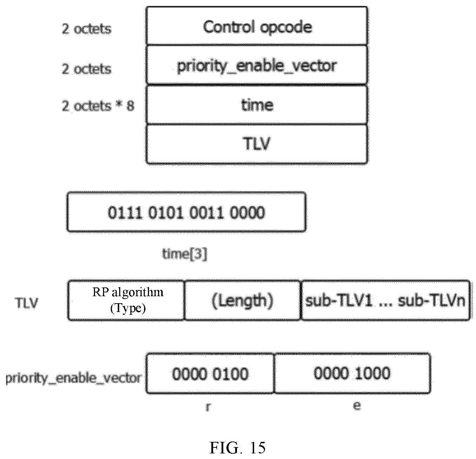

For example, when a queue is congested, some priorities adopt the deceleration function, while some priorities adopt the pause function, and the TLV field is added as deceleration information, where the deceleration type adopts the RP algorithm. The PFC frame format is as shown in FIG. 15, in which priority 2 needs to be decelerated, and priority 3 needs to be paused. The deceleration type adopts the RP algorithm with a pause time of 30000. time[3] is 30000, and the rest time fields are set to 0. The deceleration enable r[2] and the pause enable e[3] are both set to 1, the rest r[n] and e[n] are set to 0, and a decimal value of the overall priority_enable_vector is 1032. The Type is RP algorithm, and parameters to be carried are in sub-TLVs.

At step S38, when the control mode is determined to be the pause mode according to the preset control strategy, the priority_enable_vector field and the time field corresponding to the PFC frame are updated based on the pause time and the priority to obtain an eighth PFC frame and take the eighth PFC frame as the control data.

When the control mode is determined to be the pause mode according to the preset control strategy, it indicates that the means of temporarily stopping data transmission is to be adopted, and the pause function corresponding to the priority need to be enabled. That is, a bit corresponding to the priority in the lower byte of the priority_enable_vector field of the PFC frame needs to be set, and then the pause time is updated to a position where the time field corresponds to the priority. The PFC frame updated based on the pause time and the priority is the control data.

At step S39, when the control mode is determined to be the deceleration mode according to the preset control strategy, the TLV field is added to the PFC frame, and the priority_enable_vector field and the TLV field corresponding to the PFC frame are updated based on the deceleration parameter and the priority to obtain a ninth PFC frame and take the ninth PFC frame as the control data.

When the control mode is determined to be the deceleration mode according to the preset control strategy, it indicates that the means of temporarily decelerating data transmission needs to be adopted, and the deceleration function corresponding to the priority need to be enabled. That is, a bit corresponding to the priority in the higher byte of the priority_enable_vector field of the PFC frame needs to be set, and meanwhile, the TLV field is added after the time field, and then the deceleration parameter is updated to a position where the TLV field corresponds to the priority.

In the PFC frame-based congestion control method provided in the embodiments of the present disclosure, new control data is generated by enabling the reserved higher byte in the priority_enable_vector field and adding the TLV field after the time field as deceleration information, and network congestion is solved based on the control data so that the congestion control mechanism is more flexible, and the technical means for solving network congestion are enriched.

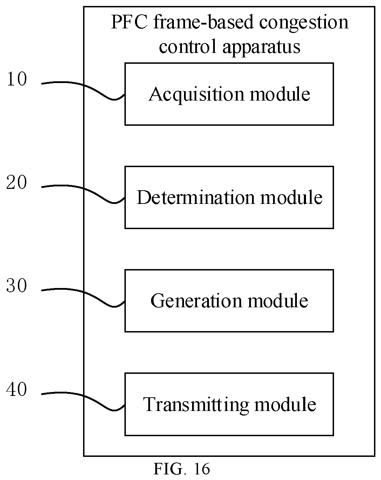

The present disclosure further provides a PFC frame-based congestion control apparatus. Referring to FIG. 16, FIG. 16 is a schematic diagram illustrating functional modules in a PFC frame-based congestion control apparatus according to the present disclosure.

The PFC frame-based congestion control apparatus includes: an acquisition module 10 by which a receiving terminal of a communication system acquires, when a physical link or a logical link is congested, a priority corresponding to a congested queue; a determination module 20 by which the receiving terminal determines a deceleration parameter and/or pause time corresponding to the priority; a generation module 30 by which the receiving terminal generates, based on the deceleration parameter, the pause time and the priority, PFC frame-based control data; and a transmitting module 40 by which the receiving terminal transmits a congestion control instruction including the control data to a transmitting terminal of the communication system so that the transmitting terminal determines, based on the control data, a transmitting speed of data flow corresponding to the priority.

Further, the PFC frame-based congestion control apparatus may further include: a detection unit by which the receiving terminal detects in real time, based on a queue length corresponding to a queue, whether congestion occurs in any of the queues.

Further, the detection unit specifically includes: a judgement unit by which the receiving terminal determines whether the queue length is greater than a threshold. When the queue length is greater than or equal to the threshold, it is determined that the queue is congested.

Further, the generation module 30 may include: a sub-generation unit 1 configured to, update, based on the pause time, the deceleration parameter and the priority when a control mode is determined to be a pause and deceleration mode according to a preset control strategy, the priority_enable_vector field and the time field corresponding to the PFC frame to obtain a first PFC frame and take the first PFC frame as the control data; a sub-generation unit 2 configured to, update, based on the pause time and the priority when the control mode is determined to be a pause mode according to the preset control strategy, the priority_enable_vector field and the time field corresponding to the PFC frame to obtain a second PFC frame and take the second PFC frame as the control data; and a sub-generation unit 3 configured to, update, based on the deceleration parameter and the priority when the control mode is determined to be a deceleration mode according to the preset control strategy, the priority_enable_vector field and the time field corresponding to the PFC frame to obtain a third PFC frame and take the third PFC frame as the control data.

Further, the generation module 30 may include: a sub-generation unit 4 configured to, add a reduce field to the PFC frame when the control mode is determined to be the pause and deceleration mode according to the preset control strategy, and update, based on the pause time, the deceleration parameter and the priority, the priority_enable_vector field, the time field and the reduce field corresponding to the PFC frame to obtain a fourth PFC frame and take the fourth PFC frame as the control data; a sub-generation unit 5 configured to, update, based on the pause time and the priority when the control mode is determined to be the pause mode according to the preset control strategy, the priority_enable_vector field and the time field corresponding to the PFC frame to obtain a fifth PFC frame and take the fifth PFC frame as the control data; and a sub-generation unit 6 configured to, add the reduce field to the PFC frame when the control mode is determined to be the deceleration mode according to the preset control strategy, and update, based on the deceleration parameter and the priority, the priority_enable_vector field and the reduce field corresponding to the PFC frame to obtain a sixth PFC frame and take the sixth PFC frame as the control data.

Further, the generation module 30 may include: a sub-generation unit 7 configured to, add a TLV field to the PFC frame when the control mode is determined to be the pause and deceleration mode according to the preset control strategy, and update, based on the pause time, the deceleration parameter and the priority, the priority_enable_vector field, the time field and the TLV field corresponding to the PFC frame to obtain a seventh PFC frame and take the seventh PFC frame as the control data; a sub-generation unit 8 configured to, update, based on the pause time and the priority when the control mode is determined to be the pause mode according to the preset control strategy, the priority_enable_vector field and the time field corresponding to the PFC frame to obtain an eighth PFC frame and take the eighth PFC frame as the control data; and a sub-generation unit 9 configured to, add the TLV field to the PFC frame when the control mode is determined to be the deceleration mode according to the preset control strategy, and update, based on the deceleration parameter and the priority, the priority_enable_vector field and the TLV field corresponding to the PFC frame to obtain a ninth PFC frame and take the ninth PFC frame as the control data.

Further, the PFC frame-based congestion control apparatus may further include: an adjustment unit by which the transmitting terminal transmits, when a control time corresponding to the control data is expired, the data flow to the receiving terminal according to a preset speed.

The present disclosure further provides a non-transitory (non-volatile) computer storage medium storing a computer executable instruction which can cause any method in the above method embodiments to be implemented.

The present disclosure further provides a computer program product including a computer program stored on a non-transitory computer-readable storage medium, the computer program including a program instruction which, when executed by a computer, causes the computer to perform the method according any one of the above method embodiments.

It should be noted that the term "comprise", "comprising" or any variant thereof used herein means to be non-exclusive so that a process, method, item or system including a series of elements includes not only said elements, but also other elements not explicitly listed, or inherent elements of such processes, methods, items or systems. In the absence of more limitations, an element defined by "comprising a ..." do not exclude the existence of additional identical elements in the process, method, item or system including the element.

The sequence numbers of the embodiments of the present disclosure are for description only and do not represent preferences of the embodiments.

Through the description of the above implementations, those skilled in the art can clearly understand that the method according to the above embodiment may be implemented by means of software plus a necessary general hardware platform. Obviously, it may also be implemented by hardware, but in most cases, the former is preferable. Based on such understanding, the technical solutions of the present invention essentially or, in other words, a part thereof contributing to the prior art, can be embodied in a form of a software product, wherein the software product is stored in a storage medium as described above (such as an ROM/RAM, a disk, or an optical disc) and includes a number of instructions to make a terminal device (which may be a mobile phone, a computer, a server, an air conditioner or a network device, etc.) to execute the methods of the various embodiments of the present disclosure.

The above are merely preferred embodiments of the present disclosure, and not intended to limit the scope of the present disclosure, and all equivalent structures or equivalent of processes that may be modified from the contents of the present disclosure and the attached drawings, or directly or indirectly applied to other related technical fields, are also included in the scope of the present disclosure.

## Claims

1. A Priority-based Flow Control, called PFC, frame-based congestion control method applied to a communication system supporting PFC, wherein each physical link or logical link corresponding to the communication system comprises a preset number of queues, and the PFC frame-based congestion control method comprises:
acquiring (S10), by a receiving terminal of the communication system when a physical link or a logical link is congested, a priority corresponding to a congested queue;
determining (S20), by the receiving terminal, a deceleration parameter and/or pause time corresponding to the priority;
generating (S30), by the receiving terminal based on the deceleration parameter, the pause time and the priority, PFC frame-based control data; and
transmitting (S40), by the receiving terminal, a congestion control instruction comprising the control data to a transmitting terminal of the communication system so that the transmitting terminal determines, based on the control data, a transmitting speed of data flow corresponding to the priority,
wherein the PFC frame comprises a priority_enable_vector field, the priority_enable_vector field comprises two bytes, one bit corresponding to the congested queue in a higher byte of the two bytes represents whether data transmission in the congested queue is temporarily decelerated, and one bit corresponding to the congested queue in a lower byte of the two types represents whether the data transmission in the congested queue is temporarily stopped.

2. The PFC frame-based congestion control method according to claim 1, wherein before the step of acquiring (S10), by the receiving terminal of the communication system when a physical link or a logical link is congested, the priority corresponding to the congested queue, the method is further **characterized by**:
detecting (S60) in real time, by the receiving terminal based on a queue length corresponding to each queue, whether the congested queue is present in the queues.

3. The PFC frame-based congestion control method according to claim 2, wherein the step of detecting (S60) in real time, by the receiving terminal based on the queue length corresponding to each queue, whether the congested queue is present in the queues comprises:
determining (S61), by the receiving terminal, whether the queue length is greater than a threshold, wherein when the queue length is greater than or equal to the threshold, it is determined that the queue is congested.

4. The PFC frame-based congestion control method according to claim 1, wherein the PFC frame further comprises a time field, and the step of generating (S30), by the receiving terminal based on the deceleration parameter, the pause time and the priority, the PFC frame-based control data comprises:
updating (S31), based on the pause time, the deceleration parameter and the priority when a control mode is determined to be a pause and deceleration mode according to a preset control strategy, the two bytes in the priority_enable_vector field and the time field corresponding to the PFC frame to obtain a first PFC frame and take the first PFC frame as the control data;
updating (S32), based on the pause time and the priority when the control mode is determined to be a pause mode according to the preset control strategy, the lower byte in the priority_enable_vector field and the time field corresponding to the PFC frame to obtain a second PFC frame and take the second PFC frame as the control data; and
updating (S33), based on the deceleration parameter and the priority when the control mode is determined to be a deceleration mode according to the preset control strategy, the higher byte in the priority_enable_vector field and the time field corresponding to the PFC frame to obtain a third PFC frame and take the third PFC frame as the control data.

5. The PFC frame-based congestion control method according to claim 1, wherein the PFC frame further comprises a time field, and the step of generating (S30), by the receiving terminal based on the deceleration parameter, the pause time and the priority, the PFC frame-based control data comprises:
adding (S34) a reduce field to the PFC frame when a control mode is determined to be a pause and deceleration mode according to a preset control strategy, and updating (S34), based on the pause time, the deceleration parameter and the priority, the two bytes in the priority_enable_vector field, the time field and the reduce field corresponding to the PFC frame to obtain a fourth PFC frame and take the fourth PFC frame as the control data;
updating (S35), based on the pause time and the priority when the control mode is determined to be a pause mode according to the preset control strategy, the lower byte in the priority_enable_vector field and the time field corresponding to the PFC frame to obtain a fifth PFC frame and take the fifth PFC frame as the control data; and
adding (S36) the reduce field to the PFC frame when the control mode is determined to be a deceleration mode according to the preset control strategy, and updating (S36), based on the deceleration parameter and the priority, the higher byte in the priority_enable_vector field and the reduce field corresponding to the PFC frame to obtain a sixth PFC frame and take the sixth PFC frame as the control data.

6. The PFC frame-based congestion control method according to claim 1, wherein the PFC frame further comprises a time field, and the step of generating (S30), by the receiving terminal based on the deceleration parameter, the pause time and the priority, the PFC frame-based control data comprises:
adding (S37) a Type Length Value, called TLV, field to the PFC frame when a control mode is determined to be a pause and deceleration mode according to a preset control strategy, and updating (S37), based on the pause time, the deceleration parameter and the priority, the two bytes in the priority_enable_vector field, the time field and the TLV field corresponding to the PFC frame to obtain a seventh PFC frame and take the seventh PFC frame as the control data;
updating (S38), based on the pause time and the priority when the control mode is determined to be a pause mode according to the preset control strategy, the lower byte in the priority_enable_vector field and the time field corresponding to the PFC frame to obtain an eighth PFC frame and take the eighth PFC frame as the control data; and
adding (S39) the TLV field to the PFC frame when the control mode is determined to be a deceleration mode according to the preset control strategy, and updating (S39), based on the deceleration parameter and the priority, the higher byte in the priority_enable_vector field and the TLV field corresponding to the PFC frame to obtain a ninth PFC frame and take the ninth PFC frame as the control data.

7. The PFC frame-based congestion control method according to any one of claims 1 to 6, wherein after the step of transmitting, by the receiving terminal, the congestion control instruction comprising the control data to the transmitting terminal of the communication system so that the transmitting terminal determines, based on the control data, the transmitting speed of data flow corresponding to the priority, the method is further **characterized by**:
transmitting (S50), by the transmitting terminal when a control time corresponding to the control data is expired, the data flow to the receiving terminal according to a preset speed.

8. A Priority-based Flow Control, called PFC, frame-based congestion control apparatus comprising:
an acquisition module (10) by which a receiving terminal of a communication system acquires, when a physical link or a logical link is congested, a priority corresponding to a congested queue;
a determination module (20) by which the receiving terminal determines a deceleration parameter and/or pause time corresponding to the priority;
a generation module (30) by which the receiving terminal generates, based on the deceleration parameter, the pause time and the priority, PFC frame-based control data; and
a transmitting module (40) by which the receiving terminal transmits a congestion control instruction comprising the control data to a transmitting terminal of the communication system so that the transmitting terminal determines, based on the control data, a transmitting speed of data flow corresponding to the priority,
wherein the PFC frame comprises a priority_enable_vector field, the priority_enable_vector field comprises two bytes, one bit corresponding to the congested queue in a higher byte of the two bytes represents whether data transmission in the congested queue is temporarily decelerated, and one bit corresponding to the congested queue in a lower byte of the two types represents whether the data transmission in the congested queue is temporarily stopped.

9. A communication system comprising:
a memory, a processor
and a Priority-based Flow Control, called PFC, frame-based congestion control program stored on the memory and executable on the processor, wherein the PFC frame-based congestion control program, when executed by the processor, causes the PFC frame-based congestion control method according to any one of claims 1 to 7 to be implemented.

10. A storage medium, wherein the storage medium stores thereon a Priority-based Flow Control, called PFC, frame-based congestion control program which, when executed by a processor, causes the PFC frame-based congestion control method according to any one of claims 1 to 7 to be implemented.

## Patentansprüche

1. Verfahren zur rahmenbasierten Überlastungssteuerung mit prioritätsbasierter Ablaufsteuerung, PFC genannt, das auf ein Kommunikationssystem angewandt wird, das eine PFC unterstützt, wobei jede physikalische Verbindung oder logische Verbindung, die dem Kommunikationssystem entspricht, eine voreingestellte Anzahl von Warteschlangen umfasst, und wobei das Verfahren zur rahmenbasierten Überlastungssteuerung der PFC umfasst:
Erfassen (S10), durch ein Empfangen-Endgerät des Kommunikationssystems, wenn eine physikalische Verbindung oder eine logische Verbindung überlastet ist, einer Priorität, die einer überlasteten Warteschlange entspricht;
Bestimmen (S20), durch das Empfangen-Endgerät, eines Verzögerungsparameters und/oder einer Pausenzeit, die der Priorität entspricht;
Erzeugen (S30), durch das Empfangen-Endgerät auf der Basis des Verzögerungsparameters, der Pausenzeit und der Priorität, von PFCrahmenbasierten Steuerdaten; und
Übertragen (S40), durch das Empfangen-Endgerät, einer Überlastungssteuerungsanweisung, die die Steuerdaten umfasst, an ein Übertragen-Endgerät des Kommunikationssystems, so dass das Übertragen-Endgerät auf der Basis der Steuerdaten eine Übertragungsgeschwindigkeit des Datenflusses bestimmt, die der Priorität entspricht,
wobei der PFC-Rahmen ein Prioritätsfreigabevektorfeld umfasst, das Prioritätsfreigabevektorfeld zwei Bytes umfasst, ein Bit, das der überlasteten Warteschlange in einem höheren Byte der zwei Bytes entspricht, repräsentiert, ob die Datenübertragung in der überlasteten Warteschlange vorübergehend verzögert wird, und ein Bit, das der überlasteten Warteschlange in einem niedrigeren Byte der zwei Typen entspricht, repräsentiert, ob die Datenübertragung in der überlasteten Warteschlange vorübergehend gestoppt wird.

2. Verfahren zur rahmenbasierten Überlastungssteuerung der PFC nach Anspruch 1, wobei das Verfahren vor dem Schritt des Erfassens (S10), durch das Empfangen-Endgerät des Kommunikationssystems, wenn eine physikalische Verbindung oder eine logische Verbindung überlastet ist, der Priorität, die der überlasteten Warteschlange entspricht, ferner **gekennzeichnet ist durch**:
Detektieren (S60) in Echtzeit, **durch** das Empfangen-Endgerät auf der Basis einer Warteschlangenlänge, die jeder Warteschlange entspricht, ob die überlastete Warteschlange in den Warteschlangen vorhanden ist.

3. Verfahren zur rahmenbasierten Überlastungssteuerung der PFC nach Anspruch 2, wobei der Schritt des Detektierens (S60) in Echtzeit, durch das Empfangen-Endgerät auf der Basis der Warteschlangenlänge, die jeder Warteschlange entspricht, ob die überlastete Warteschlange in den Warteschlangen vorhanden ist, umfasst:
Bestimmen (S61), durch das Empfangen-Endgerät, ob die Warteschlangenlänge größer als ein Schwellenwert ist, wobei, wenn die Warteschlangenlänge größer als der oder gleich dem Schwellenwert ist, bestimmt wird, dass die Warteschlange überlastet ist.

4. Verfahren zur rahmenbasierten Überlastungssteuerung der PFC nach Anspruch 1, wobei der PFC-Rahmen ferner ein Zeitfeld umfasst und der Schritt des Erzeugens (S30), durch das Empfangen-Endgerät auf der Basis des Verzögerungsparameters, der Pausenzeit und der Priorität, der PFCrahmenbasierten Steuerdaten umfasst:
Aktualisieren (S31), auf der Basis der Pausenzeit, des Verzögerungsparameters und der Priorität, wenn gemäß einer voreingestellten Steuerstrategie bestimmt wird, dass ein Steuermodus ein Pausen- und Verzögerungsmodus ist, der zwei Bytes in dem Prioritätsfreigabevektorfeld und des Zeitfelds, das dem PFC-Rahmen entspricht, um einen ersten PFC-Rahmen zu erhalten und den ersten PFC-Rahmen als die Steuerdaten zu nehmen;
Aktualisieren (S32), auf der Basis der Pausenzeit und der Priorität, wenn gemäß der voreingestellten Steuerstrategie bestimmt wird, dass der Steuermodus ein Pausenmodus ist, des niedrigeren Bytes in dem Prioritätsfreigabevektorfeld und des Zeitfelds, das dem PFC-Rahmen entspricht, um einen zweiten PFC-Rahmen zu erhalten und den zweiten PFC-Rahmen als die Steuerdaten zu nehmen; und
Aktualisieren (S33), auf der Basis des Verzögerungsparameters und der Priorität, wenn gemäß der voreingestellten Steuerstrategie bestimmt wird, dass der Steuermodus ein Verzögerungsmodus ist, des höheren Bytes in dem Prioritätsfreigabevektorfeld und des Zeitfelds, das dem PFC-Rahmen entspricht, um einen dritten PFC-Rahmen zu erhalten und den dritten PFC-Rahmen als die Steuerdaten zu nehmen.

5. Verfahren zur rahmenbasierten Überlastungssteuerung der PFC nach Anspruch 1, wobei der PFC-Rahmen ferner ein Zeitfeld umfasst und der Schritt des Erzeugens (S30), durch das Empfangen-Endgerät auf der Basis des Verzögerungsparameters, der Pausenzeit und der Priorität, der PFCrahmenbasierten Steuerdaten umfasst:
Hinzufügen (S34) eines Reduzierungsfelds zu dem PFC-Rahmen, wenn gemäß einer voreingestellten Steuerstrategie bestimmt wird, dass ein Steuermodus ein Pausen- und Verzögerungsmodus ist, und Aktualisieren (S34), auf der Basis der Pausenzeit, des Verzögerungsparameters und der Priorität, der zwei Bytes in dem Prioritätsfreigabevektorfeld, des Zeitfelds und des Reduzierungsfelds, das dem PFC-Rahmen entspricht, um einen vierten PFC-Rahmen zu erhalten und den vierten PFC-Rahmen als die Steuerdaten zu nehmen;
Aktualisieren (S35), auf der Basis der Pausenzeit und der Priorität, wenn gemäß der voreingestellten Steuerstrategie bestimmt wird, dass der Steuermodus ein Pausenmodus ist, des niedrigeren Bytes in dem Prioritätsfreigabevektorfeld und des Zeitfelds, das dem PFC-Rahmen entspricht, um einen fünften PFC-Rahmen zu erhalten und den fünften PFC-Rahmen als die Steuerdaten zu nehmen; und
Hinzufügen (S36) des Reduzierungsfelds zu dem PFC-Rahmen, wenn gemäß der voreingestellten Steuerstrategie bestimmt wird, dass der Steuermodus ein Verzögerungsmodus ist, und Aktualisieren (S36), auf der Basis des Verzögerungsparameters und der Priorität, des höheren Bytes in dem Prioritätsfreigabevektorfeld und des Reduzierungsfelds, das dem PFC-Rahmen entspricht, um einen sechsten PFC-Rahmen zu erhalten und den sechsten PFC-Rahmen als die Steuerdaten zu nehmen.

6. Verfahren zur rahmenbasierten Überlastungssteuerung der PFC nach Anspruch 1, wobei der PFC-Rahmen ferner ein Zeitfeld umfasst und der Schritt des Erzeugens (S30), durch das Empfangen-Endgerät auf der Basis des Verzögerungsparameters, der Pausenzeit und der Priorität, der PFCrahmenbasierten Steuerdaten umfasst:
Hinzufügen (S37) eines Typs-Längenwert-Felds, TLV-Felds genannt, zu dem PFC-Rahmen, wenn gemäß einer voreingestellten Steuerstrategie bestimmt wird, dass ein Steuermodus ein Pausen- und Verzögerungsmodus ist, und Aktualisieren (S37), auf der Basis der Pausenzeit, des Verzögerungsparameters und der Priorität, der zwei Bytes in dem Prioritätsfreigabevektorfeld, des Zeitfelds und des TLV-Felds, das dem PFC-Rahmen entspricht, um einen siebten PFC-Rahmen zu erhalten und den siebten PFC-Rahmen als die Steuerdaten zu nehmen;
Aktualisieren (S38), auf der Basis der Pausenzeit und der Priorität, wenn gemäß der voreingestellten Steuerstrategie bestimmt wird, dass der Steuermodus ein Pausenmodus ist, des niedrigeren Bytes in dem Prioritätsfreigabevektorfeld und des Zeitfelds, das dem PFC-Rahmen entspricht, um einen achten PFC-Rahmen zu erhalten und den achten PFC-Rahmen als die Steuerdaten zu nehmen; und
Hinzufügen (S39) des TLV-Felds zu dem PFC-Rahmen, wenn gemäß der voreingestellten Steuerstrategie bestimmt wird, dass der Steuermodus ein Verzögerungsmodus ist, und Aktualisieren (S39), auf der Basis des Verzögerungsparameters und der Priorität, des höheren Bytes in dem Prioritätsfreigabevektorfeld und des TLV-Felds, das dem PFC-Rahmen entspricht, um einen neunten PFC-Rahmen zu erhalten und den neunten PFC-Rahmen als die Steuerdaten zu nehmen.

7. Verfahren zur rahmenbasierten Überlastungssteuerung der PFC nach einem der Ansprüche 1 bis 6, wobei das Verfahren nach dem Schritt des Übertragens, durch das Empfangen-Endgerät, der Überlastungssteuerungsanweisung, die die Steuerdaten umfasst, an das Übertragen-Endgerät des Kommunikationssystems, so dass das Übertragen-Endgerät auf der Basis der Steuerdaten die Übertragungsgeschwindigkeit des Datenflusses bestimmt, die der Priorität entspricht, ferner **gekennzeichnet ist durch**:
Übertragen (S50), **durch** das Übertragen-Endgerät, wenn eine Steuerzeit, die den Steuerdaten entspricht, abgelaufen ist, des Datenflusses an das Empfangen-Endgerät gemäß einer voreingestellten Geschwindigkeit.

8. Vorrichtung zur rahmenbasierten Überlastungssteuerung mit prioritätsbasierter Ablaufsteuerung, PFC genannt, umfassend:
ein Erfassungsmodul (10), durch das ein Empfangen-Endgerät eines Kommunikationssystems, wenn eine physikalische Verbindung oder eine logische Verbindung überlastet ist, eine Priorität erfasst, die einer überlasteten Warteschlange entspricht;
ein Bestimmungsmodul (20), durch das das Empfangen-Endgerät einen Verzögerungsparameter und/oder eine Pausenzeit bestimmt, die der Priorität entspricht;
ein Erzeugungsmodul (30), durch das das Empfangen-Endgerät auf der Basis des Verzögerungsparameters, der Pausenzeit und der Priorität PFCrahmenbasierte Steuerdaten erzeugt; und
ein Übertragungsmodul (40), durch das das Empfangen-Endgerät eine Überlastungssteuerungsanweisung, die die Steuerdaten umfasst, an ein Übertragen-Endgerät des Kommunikationssystems überträgt, so dass das Übertragen-Endgerät auf der Basis der Steuerdaten eine Übertragungsgeschwindigkeit des Datenflusses bestimmt, die der Priorität entspricht,
wobei der PFC-Rahmen ein Prioritätsfreigabevektorfeld umfasst, das Prioritätsfreigabevektorfeld zwei Bytes umfasst, ein Bit, das der überlasteten Warteschlange in einem höheren Byte der zwei Bytes entspricht, repräsentiert, ob die Datenübertragung in der überlasteten Warteschlange vorübergehend verzögert wird, und ein Bit, das der überlasteten Warteschlange in einem niedrigeren Byte der zwei Typen entspricht, repräsentiert, ob die Datenübertragung in der überlasteten Warteschlange vorübergehend gestoppt wird.

9. Kommunikationssystem, umfassend: einen Speicher, einen Prozessor und ein rahmenbasiertes Überlastungssteuerungsprogramm mit prioritätsbasierter Ablaufsteuerung, PFC genannt, das auf dem Speicher gespeichert ist und auf dem Prozessor ausführbar ist, wobei das rahmenbasierte Überlastungssteuerungsprogramm der PFC, wenn es durch den Prozessor ausgeführt wird, bewirkt, dass das Verfahren zur rahmenbasierten Überlastungssteuerung der PFC nach einem der Ansprüche 1 bis 7 implementiert wird.

10. Speichermedium, wobei das Speichermedium darauf ein rahmenbasiertes Überlastungssteuerungsprogramm mit prioritätsbasierter Ablaufsteuerung, PFC genannt, speichert, das, wenn es durch einen Prozessor ausgeführt wird, bewirkt, dass das Verfahren zur rahmenbasierten Überlastungssteuerung der PFC nach einem der Ansprüche 1 bis 7 implementiert wird.

## Revendications

1. Procédé de contrôle de congestion à base de trame de contrôle de flux à base de priorité, appelé PFC, appliqué à un système de communication prenant en charge le PFC, dans lequel chaque liaison physique ou liaison logique correspondant au système de communication comprend un nombre prédéfini de files d'attente, et le procédé de contrôle de congestion à base de trame de PFC comprenant les étapes suivantes :
acquérir (S10), par un terminal de réception du système de communication lorsqu'une liaison physique ou une liaison logique est encombrée, une priorité correspondant à une file d'attente encombrée ;
déterminer (S20), par le terminal de réception, un paramètre de décélération et/ou un temps de pause correspondant à la priorité ;
générer (S30), par le terminal de réception sur la base du paramètre de décélération, du temps de pause et de la priorité, des données de contrôle à base de trame de PFC ; et
envoyer (S40), par le terminal de réception, une instruction de contrôle de congestion comprenant les données de contrôle à un terminal de transmission du système de communication de sorte que le terminal de transmission détermine, sur la base des données de contrôle, une vitesse de transmission de flux de données correspondant à la priorité,
dans lequel la trame de PFC comprend un champ de vecteur d'activation de priorité, le champ de vecteur d'activation de priorité comprend deux octets, un bit correspondant à la file d'attente encombrée dans un octet supérieur des deux octets représente si la transmission de données dans la file d'attente encombrée est temporairement ralentie, et un bit correspondant à la file d'attente encombrée dans un octet inférieur des deux octets représente si la transmission de données dans la file d'attente encombrée est temporairement arrêtée.

2. Procédé de contrôle de congestion à base de trame de PFC selon la revendication 1, dans lequel avant l'étape consistant à acquérir (S10), par le terminal de réception du système de communication lorsqu'une liaison physique ou une liaison logique est encombrée, la priorité correspondant à la file d'attente encombrée, le procédé est en outre **caractérisé par** les étapes suivantes :
détecter (S60) en temps réel, par le terminal de réception sur la base d'une longueur de file d'attente correspondant à chaque file d'attente, si la file d'attente encombrée est présente dans les files d'attente.

3. Procédé de contrôle de congestion à base de trame de PFC selon la revendication 2, dans lequel l'étape consistant à détecter (S60) en temps réel, par le terminal de réception sur la base de la longueur de file d'attente correspondant à chaque file d'attente, si la file d'attente encombrée est présente dans les files d'attente comprend les étapes suivantes :
déterminer (S61), par le terminal de réception, si la longueur de file d'attente est supérieure à un seuil, dans lequel lorsque la longueur de file d'attente est supérieure ou égale au seuil, il est déterminé que la file d'attente est encombrée.

4. Procédé de contrôle de congestion à base de trame de PFC selon la revendication 1, dans lequel la trame de PFC comprend en outre un champ de temps, et l'étape consistant à générer (S30), par le terminal de réception sur la base du paramètre de décélération, du temps de pause et de la priorité, les données de contrôle à base de trame de PFC comprend les étapes suivantes :
mettre à jour (S31), sur la base du temps de pause, du paramètre de décélération et de la priorité lorsqu'il est déterminé qu'un mode de contrôle est un mode de pause et de décélération selon une stratégie de contrôle prédéfinie, les deux octets dans le champ de vecteur d'activation de priorité et le champ de temps correspondant à la trame de PFC pour obtenir une première trame de PFC et prendre la première trame de PFC comme données de contrôle ;
mettre à jour (S32), sur la base du temps de pause et de la priorité lorsqu'il est déterminé que le mode de contrôle est un mode de pause selon la stratégie de contrôle prédéfinie, l'octet inférieur dans le champ de vecteur d'activation de priorité et le champ de temps correspondant à la trame de PFC pour obtenir une deuxième trame de PFC et prendre la deuxième trame de PFC comme données de contrôle ; et
mettre à jour (S33), sur la base du paramètre de décélération et de la priorité lorsqu'il est déterminé que le mode de contrôle est un mode de décélération selon la stratégie de contrôle prédéfinie, l'octet supérieur dans le champ de vecteur d'activation de priorité et le champ de temps correspondant à la trame de PFC pour obtenir une troisième trame de PFC et prendre la troisième trame de PFC comme données de contrôle.

5. Procédé de contrôle de congestion à base de trame de PFC selon la revendication 1, dans lequel la trame de PFC comprend en outre un champ de temps, et l'étape consistant à générer (S30), par le terminal de réception sur la base du paramètre de décélération, du temps de pause et de la priorité, les données de contrôle à base de trame de PFC comprend les étapes suivantes :
ajouter (S34) un champ de réduction à la trame de PFC lorsqu'il est déterminé qu'un mode de contrôle est un mode de pause et de décélération selon une stratégie de contrôle prédéfinie, et mettre à jour (S34), sur la base du temps de pause, du paramètre de décélération et de la priorité, les deux octets dans le champ de vecteur d'activation de priorité, le champ de temps et le champ de réduction correspondant à la trame de PFC pour obtenir une quatrième trame de PFC et prendre la quatrième trame de PFC comme données de contrôle ;
mettre à jour (S35), sur la base du temps de pause et de la priorité lorsqu'il est déterminé que le mode de contrôle est un mode de pause selon la stratégie de contrôle prédéfinie, l'octet inférieur dans le champ de vecteur d'activation de priorité et le champ de temps correspondant à la trame de PFC pour obtenir une cinquième trame de PFC et prendre la cinquième trame de PFC comme données de contrôle ; et
ajouter (S36) le champ de réduction à la trame de PFC lorsqu'il est déterminé que le mode de contrôle est un mode de décélération selon la stratégie de contrôle prédéfinie, et mettre à jour (S36), sur la base du paramètre de décélération et de la priorité, l'octet supérieur dans le champ de vecteur d'activation de priorité et le champ de réduction correspondant à la trame de PFC pour obtenir une sixième trame de PFC et prendre la sixième trame de PFC comme données de contrôle.

6. Procédé de contrôle de congestion à base de trame de PFC selon la revendication 1, dans lequel la trame de PFC comprend en outre un champ de temps, et l'étape consistant à générer (S30), par le terminal de réception sur la base du paramètre de décélération, du temps de pause et de la priorité, les données de contrôle à base de trame de PFC comprend les étapes suivantes :
ajouter (S37) un champ de valeur de longueur de type, appelée TLV, à la trame de PFC lorsqu'il est déterminé qu'un mode de contrôle est un mode de pause et de décélération selon une stratégie de contrôle prédéfinie, et mettre à jour (S37), sur la base du temps de pause, du paramètre de décélération et de la priorité, les deux octets dans le champ de vecteur d'activation de priorité, le champ de temps et le champ TLV correspondant à la trame de PFC pour obtenir une septième trame de PFC et prendre la septième trame de PFC comme données de contrôle ;
mettre à jour (S38), sur la base du temps de pause et de la priorité lorsqu'il est déterminé que le mode de contrôle est un mode de pause selon la stratégie de contrôle prédéfinie, l'octet inférieur dans le champ de vecteur d'activation de priorité et le champ de temps correspondant à la trame de PFC pour obtenir une huitième trame de PFC et prendre la huitième trame de PFC comme données de contrôle ; et
ajouter (S39) le champ TLV à la trame de PFC lorsqu'il est déterminé que le mode de contrôle est un mode de décélération selon la stratégie de contrôle prédéfinie, et mettre à jour (S39), sur la base du paramètre de décélération et de la priorité, l'octet supérieur dans le champ de vecteur d'activation de priorité et le champ TLV correspondant à la trame de PFC pour obtenir une neuvième trame de PFC et prendre la neuvième trame de PFC comme données de contrôle.

7. Procédé de contrôle de congestion à base de trame de PFC selon l'une quelconque des revendications 1 à 6, dans lequel après l'étape consistant à envoyer, par le terminal de réception, l'instruction de contrôle de congestion comprenant les données de contrôle au terminal de transmission du système de communication de sorte que le terminal de transmission détermine, sur la base des données de contrôle, la vitesse de transmission de flux de données correspondant à la priorité, le procédé est en outre **caractérisé par** les étapes suivantes :
envoyer (S50), par le terminal de transmission lorsqu'un temps de contrôle correspondant aux données de contrôle a expiré, le flux de données au terminal de réception selon une vitesse prédéfinie.

8. Appareil de contrôle de congestion à base de trame de contrôle de flux à base de priorité, appelé PFC, comprenant :
un module d'acquisition (10) par lequel un terminal de réception d'un système de communication acquiert, lorsqu'une liaison physique ou une liaison logique est encombrée, une priorité correspondant à une file d'attente encombrée ;
un module de détermination (20) par lequel le terminal de réception détermine un paramètre de décélération et/ou un temps de pause correspondant à la priorité ;
un module de génération (30) par lequel le terminal de réception génère, sur la base du paramètre de décélération, du temps de pause et de la priorité, des données de contrôle à base de trame de PFC ; et
un module de transmission (40) par lequel le terminal de réception envoie une instruction de contrôle de congestion comprenant les données de contrôle à un terminal de transmission du système de communication de sorte que le terminal de transmission détermine, sur la base des données de contrôle, une vitesse de transmission de flux de données correspondant à la priorité,
dans lequel la trame de PFC comprend un champ de vecteur d'activation de priorité, le champ de vecteur d'activation de priorité comprend deux octets, un bit correspondant à la file d'attente encombrée dans un octet supérieur des deux octets représente si la transmission de données dans la file d'attente encombrée est temporairement ralentie, et un bit correspondant à la file d'attente encombrée dans un octet inférieur des deux octets représente si la transmission de données dans la file d'attente encombrée est temporairement arrêtée.

9. Système de communication comprenant : une mémoire, un processeur et un programme de contrôle de congestion à base de trame de contrôle de flux à base de priorité, appelé PFC, stocké sur la mémoire et exécutable sur le processeur, dans lequel le programme de contrôle de congestion à base de trame de PFC, lorsqu'il est exécuté par le processeur, amène le procédé de contrôle de congestion à base de trame de PFC selon l'une quelconque des revendications 1 à 7 à être mis en œuvre.

10. Moyen de stockage, dans lequel le moyen de stockage stocke sur celui-ci un programme de contrôle de congestion à base de trame de contrôle de flux à base de priorité, appelé PFC, qui, lorsqu'il est exécuté par un processeur, amène le procédé de contrôle de congestion à base de trame de PFC selon l'une quelconque des revendications 1 à 7 à être mis en œuvre.
